# EUROPÄISCHE PATENTANMELDUNG

(11) **EP 3 061 980 A1**
(43) Veröffentlichungstag der Anmeldung: **31.08.2016**
(21) Anmeldenummer: 16154043.0
(22) Anmeldetag: 03.02.2016
(51) Int. Cl.: F16B 43/00, F16B 5/04, F16B 37/06

(54) **BLECHELEMENT MIT LOCH, BLECHTEIL UND ZUSAMMENBAUTEIL SOWIE HERSTELLUNGSVERFAHREN**

(30) Priorität: 27.02.2015 DE 102015102865
(71) Anmelder: Profil Verbindungstechnik GmbH & Co. KG, 61381 Friedrichsdorf (DE)
(72) Erfinder: BABEJ, Jiri, 35423 Lich (DE); DIEHL, Oliver, 61350 Bad Homburg v.d.H. (DE); HUMPERT, Richard, 61231 Bad Nauheim (DE)
(74) Vertreter: Manitz, Finsterwald & Partner GbR

(57) **Zusammenfassung**

Ein fertiges Zusammenbauteil besteht aus einem Blechteil (16), einem Blechelement (10) und einem Nietelement (18). Das Nietelement ist mit einem Kopfteil größeren Durchmessers, das als Gewindeträger dient und welches eine Blechanlagefläche bildet, sowie mit einem hohlzylindrischen Nietabschnitt kleineren Durchmessers versehen.

Der Nietabschnitt steht von dem Kopfteil auf der Seite der Blechanlagefläche hervor und erstreckt sich durch eine Lochung und einen Kragen des Blechteils sowie durch ein Loch des Blechelements hindurch und ist auf der dem Blechteil abgewandten Seite des Blechelements zu einem mindestens L-förmigen, vorzugsweise U-förmigen Nietbördel umgebildet, wobei die Blechanlagefläche auf der dem Blechelement abgewandten Seite des Blechteils anliegt. Ferner wird ein Blechelement und ein erstes Zusammenbauteil bestehend aus dem Blechteil und dem Blechelement wie auch Herstellungsverfahren beansprucht.

## Beschreibung

Die vorliegende Erfindung betrifft ein Blechelement mit Loch, ein Blechteil und ein Zusammenbauteil sowie ein Herstellungsverfahren, insbesondere befasst sich die Erfindung mit einem Blechelement mit Loch zur Anwendung in ein Zusammenbauteil mit einem Blechteil und mit einem Nietelement.

Es gibt Bestrebungen im PKW-Bau sicherheitsrelevante Bauteile wie Sitzbefestigungen an relativ dünnen Blechteilen, von zum Beispiel - und ohne Einschränkung - 1,0 bis 1,5mm Dicke und beliebiger Festigkeit, zum Beispiel etwa 500MPa, zu befestigen und zwar in einer Anordnung bei der das Kopfteil des Befestigungs-elements oberhalb eines relativ dünnen Bodenblechs und der Nietbördel unterhalb des Bodenblechs angeordnet ist. D.h. die Anschraubkräfte wirken senkrecht nach oben und versuchen den Nietbördel durch das Blechteil hindurchzuziehen. Da das Blechteil relativ dünn und daher keine ausgeprägte lokale Steifigkeit aufweist, ist es schwierig eine Konstruktion zu finden, die einerseits sich in das Herstellungsverfahren des Bodenblechs integrieren lässt und andererseits im Falle eines Unfalls eine ausreichende Steifigkeit aufweist, um das Herausreißen der Sitzverankerung zu vermeiden.

Aufgabe der vorliegenden Erfindung ist es hier Abhilfe zu schaffen.

Dies gelingt erfindungsgemäß dadurch, dass ein Blechelement, insbesondere ein planares Blechelement, zur lokalen Versteifung des Blechteils vorgesehen ist, wobei der Lochrand des Blechelements mit mindestens einem eine Hinterschneidung bildenden radial nach innen gerichteten Vorsprung versehen ist.

Hierdurch kann das Blechelement in einem ersten Herstellungsverfahren formschlüssig an das Blechteil angebracht werden, indem Blechmaterial des Blechteils in das Loch des Blechelements und in Eingriff mit der Hinterschneidung gebracht wird, damit das Blechelement verliersicher am Blechteil gehalten ist.

An sich würde es ausreichen, wenn nur ein radial nach innen gerichteter umlaufender Vorsprung, d.h. eine umlaufende Hinterschneidung am Lochrand des Blechelements vorgesehen ist. Bevorzugt ist allerdings eine Anordnung, in der das Blechelement in Bezug auf einer Ebene, die senkrecht zu der mittleren Längsachse des Loches in halber Höhe des Loches symmetrisch ausgebildet ist und mindestens eine Hinterschneidung auf beiden Seiten der Ebene im Lochrand vorgesehen ist.

Dadurch, dass ein solches symmetrisches Blechelement verwendet wird, spielt es keine Rolle, mit welcher Orientierung das Blechelement an dem Blechteil angebracht wird, d.h. mit welcher der beiden Stirnseiten das Blechelement an dem Blechteil anliegt. Dies bedeutet eine wesentliche Vereinfachung des Herstellungsverfahrens, da die Blechelemente von einer losen Schüttung solcher Blechelemente entnommen werden können, ohne auf eine besondere Orientierung achten zu müssen.

Besonders bevorzugt ist es, wenn mehrere, lokal ausgebildete, radial nach innen gerichtete Hinterschneidungen bildende Vorsprünge vorgesehen sind, die beispielsweise auf beiden Seiten der genannten Ebene vorgesehen sind.

Solche Hinterschneidungen bildende Vorsprünge können durch jeweilige keilförmige, insbesondere radial zur mittleren Längsachse des Loches verlaufende Vertiefungen, in einer Stirnseite bzw. in beiden Stirnseiten des Blechelements gebildet sein, deren größte Tiefe am Lochrand vorliegt. Solche keilförmigen Vertiefungen, die zu radial nach innen gerichteten, Hinterschneidungen bildenden Vorsprüngen bzw. Nasen umgeformt sind, sind der EP-B-759510 zu entnehmen. Allerdings werden sie in der EP-Schrift in der Seitenwand einer stirnseitigen Vertiefung eines Befestigungselements ausgebildet und nicht im Lochrand eines Blechelements.

Solche Hinterschneidungen bildende Vorsprünge bzw. Nasen können auch durch mindestens eine wellenförmig um die mittlere Längsachse verlaufende und in einer Stirnseite des Blechelements benachbart zum Lochrand vorgesehene Einprägung, vorzugsweise durch jeweilige in den beiden Stirnseiten des Blechelements vorgesehene wellenförmige Einprägungen gebildet sein. Solche wellenförmige Einprägungen, die zur Ausbildung von radial nach innen gerichteten Hinterschneidungen bildenden Vorsprüngen führen, sind aus der EP-B- 957273 bekannt.

Besonders bevorzugt ist es, wenn das Blechelement die Form einer kreisrunden Metallscheibe aufweist. Solche Metallscheiben lassen sich kostengünstig aus Blechmaterial herstellen und die Ausbildung der radial nach innen gerichteten, die Hinterschneidungen bildenden Vorsprünge kann im Verfahren zur Herstellung der Metallscheiben kostengünstig integriert werden.

Die vorliegende Erfindung befasst sich ferner mit einem Blechteil zur Anwendung in ein erstes Zusammenbauteil mit einem erfindungsgemäßen Blechelement wie oben beschrieben und weist das besondere Kennzeichen auf, dass das Blechteil mit einer Lochung versehen ist, deren Umrandung zu einem aus der Ebene des Blechteils herausstehenden Kragen umgebildet ist, der in das Loch des Blechelements hinein geformt ist und mit mindestens einer der Hinterschneidungen in Eingriff steht, wodurch das Blechelement am Blechteil verliersicher angebracht ist.

Solche lokal ausgebildeten radial nach innen gerichteten Hinterschneidungen bildenden Vorsprünge bzw. Nasen sind auch deshalb besonders vorteilhaft, weil sie mit dem Material des Kragens in Eingriff stehen und zwischen dem Blechteil und dem Blechelement nicht nur eine axiale Trennung des Blechelements und des Blechteils verhindern, wobei die Bezeichnung axial hier in Bezug auf die mittlere Längsachse des Loches des Blechelement bzw. des Kragens zu verstehen ist, sondern auch gleichzeitig eine Verdrehsicherung zwischen dem Blechelement und dem Blechteil bilden.

Ferner befasst sich die vorliegende Anmeldung mit einem fertigen Zusammenbauteil bestehend aus einem Blechteil mit angebrachtem Blechelement wie oben beschrieben zusammen mit einem Nietelement, wobei das fertige Zusammenbauteil sich dadurch auszeichnet, dass das Nietelement mit einem Kopfteil größeren Durchmessers, das als Gewindeträger dient und welches eine Blechanlagefläche bildet sowie mit einem hohlzylindrischen Nietabschnitt kleineren Durchmessers versehen ist, der von dem Kopfteil auf der Seite der Blechanlagefläche vorsteht, der sich durch die Lochung und den Kragen des Blechteils sowie durch das Loch des Blechelements hindurch erstreckt und auf der dem Blechteil abgewandten Seite des Blechelements zu einem mindestens L-förmigen vorzugsweise U-förmigen Nietbördel umgebildet ist, wobei die Blechanlagefläche auf der dem Blechelement abgewandten Seite des Blechteils anliegt.

Das so ausgelegte Zusammenbauteil ist im Stande die normalen Beanspruchungen, die am Beispiel eines KFZ-Sitzes während des normalen Betriebs auftreten, zum Beispiel die Kräfte, die entstehen, wenn das Fahrzeug beschleunigt wird oder die Zentrifugalkräfte, die bei der Kurvenfahrt auftreten bzw. die Kräfte die herrschen, wenn das Fahrzeug bremst, insbesondere wenn der Fahrer auf das Bremspedal drückt, aufzunehmen, ohne dass das Nietelement aus dem Bodenblech ausgeknöpft wird oder ausreißt. Darüber hinaus ist das erfindungsgemäße Zusammenbauteil in der Lage die Kräfte, die im Falle eines Unfalls auftreten auszuhalten, so dass der Sitz nicht aus der Verankerung herausgerissen wird. Dies wird durch die durch das Blechelement erreichte lokale Versteifung des Bodenblechs verhindert, indem eine konusförmige Verformung des Blechteils mit Aufweiten des Loches des Blechteils nicht in dem Maße auftritt, dass das Nietbördel durch das aufgeweitete Loch hindurchtreten kann, wodurch der Sitz nicht mehr im Fahrzeug verankert wäre.

Ferner ist es von Vorteil, dass die Anbringung des Nietelements an das Blechteil in einem getrennten Verfahrensschritt von der Anbringung des Blechelements an das Blechteil erfolgt. Somit kann die Herstellung des Zusammenbauteils zum Beispiel in zwei aufeinanderfolgenden Schritten in einem Folgeverbundwerkzeug erfolgen oder in unterschiedlichen Werkzeugen einer Transferlinie oder gar in unterschiedlichen Werkstätten.

Insbesondere ist es günstig, wenn der Nietbördel auf der vom Blechteil abgewandte Stirnseite des Blechelements, vom Lochrand aus gemessen, das Blechelement radial um mindestens die radiale Dicke des zylindrischen Nietabschnitts überlappt. Hierdurch kann sichergestellt werden, dass die maximale Festigkeit des zylindrischen Teils des Nietabschnitts zur Verfügung steht und dass die Kräfte, die im Falle eines Unfalls herrschen, nicht ausreichen, um den Nietbördel so zurück zu formen, dass das Nietelement durch das Blechelement und das Blechteil herausgezogen wird.

Vorzugsweise ist das Nietelement im Bereich der Blechanlagefläche und/oder im Bereich des Nietabschnitts mit Verdrehsicherungsmerkmalen versehen, die sich im Blechteil bzw. in dessen Kragen abbilden, und für die verdrehsichere Anbringung des Nietelements am Blechteil sorgen. Dadurch wird die verdrehsichere Anbringung des Nietelements an das Blechteil sichergestellt. Von Vorteil ist es auch, dass das Blechelement ohnehin verdrehsicher an das Blechteil angebracht ist. Dies ist allerdings nicht zwingend erforderlich, da das Loch des Blechelements den Kragen des Blechteils so versteift, dass die Verdrehsicherungsmerkmale am Nietelement ohnehin ausreichen, um die notwendige Verdrehsicherung gegenüber dem Blechteil sicher zu stellen. Dies ist auch die Erklärung warum ein umlaufender radialer Vorsprung am Lochrand des Blechteils, der eine umlaufende Hinterschneidung für das Kragenmaterial bildet, ausreicht, um das Blechelement verliersicher an das Blechteil anzubringen, ohne dass eine besondere Verdrehsicherung zwischen diesen Teilen erfolgt.

Es kann sich bei dem im Zusammenbauteil verwendeten Nietelement um ein Mutterelement handeln, dessen Innengewinde im Kopfteil vorgesehen ist bzw. von diesem getragen ist. Alternativ hierzu kann es sich bei dem im Zusammenbauteil verwendeten Nietelement um ein Bolzenelement handeln, dessen ein Außengewinde aufweisendes Schaftteil vom Kopfteil auf der dem Nietabschnitt abgewandten Seite weg steht bzw. getragen ist.
Ferner befasst sich die vorliegende Erfindung mit einem Verfahren zur Herstellung eines ersten Zusammenbauteils, bestehend aus einem Blechteil und einem Blechelement gemäß Anspruch 13, bei dem das Blechteil gelocht, zu dem Kragen umgeformt und radial gegen den Lochrand und in Eingriff mit der Hinterschneidung bzw. mit den Hinterschneidungen oder mindestens mit einigen der Hinterschneidungen gebracht wird.

Darüber hinaus befasst sich die vorliegende Erfindung auch mit einem Verfahren nach Anspruch 14, bei dem zur Herstellung des fertigen Zusammenbauteils der zylindrische Nietabschnitt des Nietelements von der dem Blechelement abgewandten Seite des Blechteils durch dessen Lochung sowie dessen Kragen und das Loch des Blechelements hindurch geführt wird bis die Blechanlagefläche an dem Blechteil anliegt und die Verdrehsicherungsmerkmale in Eingriff mit dem Blechteil und/oder Innenseite des Kragens gelangen und dass der Bereich des Nietabschnitts auf der dem Blechteil abgewandten Seite des Blechelements zu einem mindestens L-förmigen, vorzugsweise U-förmigen Nietbördel umgebildet ist, wobei der Nietbördel die dem Blechteil abgewandte Stirnseite des Blechelements vom Lochrand aus gemessen, radial um mindestens die radiale Dicke des zylindrischen Nietabschnitts überlappt.

Das Verfahren zur Anbringung des Blechteils an das Blechelement zur Bildung eines ersten Zusammenbauteils und das Verfahren zur Anbringung des Nietelements an das erste Zusammenbauteil zur Bildung eines fertigen Zusammenbauteils kann in unterschiedliche, insbesondere aufeinanderfolgenden Stufen eines Folgeverbundwerkzeugs erfolgen, wodurch das fertige Zusammenbauteil kostengünstig hergestellt werden kann. Alternativ hierzu können das erste Zusammenbauteil und anschließend das fertige Zusammenbauteil in einer Transferanlage gefertigt werden. Auch ist eine Herstellung des ersten Zusammenbauteils und des fertigen Zusammenbauteils in unterschiedlichen Werkstätten oder Hallen möglich, da das Blechelement verliersicher an dem Blechteil gehalten ist.

Die Erfindung wird nachfolgend anhand von Ausführungsbeispiele unter Bezugnahme auf die beigefügte Zeichnungen näher erläutert, in der zeigen:
- Fig. 1: einen teilweise geschnittenen Ausschnitt aus einem vorgelochten Blechteil,
- Fig. 2: eine teilweise geschnittene Seitenansicht eines erfindungsgemäßen Blechelements,
- Fig. 3: eine teilweise geschnittene Seitenansicht eines ersten Zusammenbauteils bestehend aus dem Blechteil der Fig. 1 und dem Blechelement der Fig. 2,
- Fig. 4A: eine erste teilweise geschnittene Darstellung der ersten Phase der Anbringung eines Nietelements an das Zusammenbauteil der Fig. 3,
- Fig. 4B: eine teilweise geschnittene Darstellung der zweiten Phase der Anbringung des Nietelements der Fig. 4B an das Zusammenbauteil der Fig. 3 zur Herstellung eines fertiggestellten weiteren Zusammenbauteils, das in Fig. 4B ersichtlich ist.
- Fig. 5A: das gleiche Blechelement wie in Fig. 2,
- Fig. 5B: eine perspektivische Darstellung des Blechelements der Fig. 5A,
- Fig. 5C: eine halbe Draufsicht auf das Blechelement der Fig. 5A,
- Fig. 5D: eine abgewandelte Form des Blechelements gemäß der Fig. 5A in einer Darstellung entsprechend der Fig. 5D,
- Fig. 6A: eine Darstellung einer alternativen Form des Blechelements der Fig.2 mit einem umlaufenden, nach innen gerichteten und eine Hinterschneidung bildenden Vorsprung am Lochrand des Blechelements,
- Fig. 6B: eine Darstellung einer weiteren alternativen Form des Blechelements der Fig. 2 mit zwei umlaufenden nach innen gerichteten und jeweilige Hinterschneidungen bildenden Vorsprung am Lochrand des Blechelements,
- Fig. 7: eine teilweise geschnittene Ansicht eines Stempels, der zur Bildung des Kragens des Blechteils gemäß Fig. 3 ausgelegt ist und
- Fig. 8: eine geschnittene Darstellung einer Matrize, die zur Ausbildung des Nietbördels des Nietelements gemäß Fig. 4B ausgelegt ist.

In allen Figuren deutet der Buchstabe L auf die mittlere Längsachse des jeweils gezeigten Teils bzw. der jeweils gezeigten Teile.

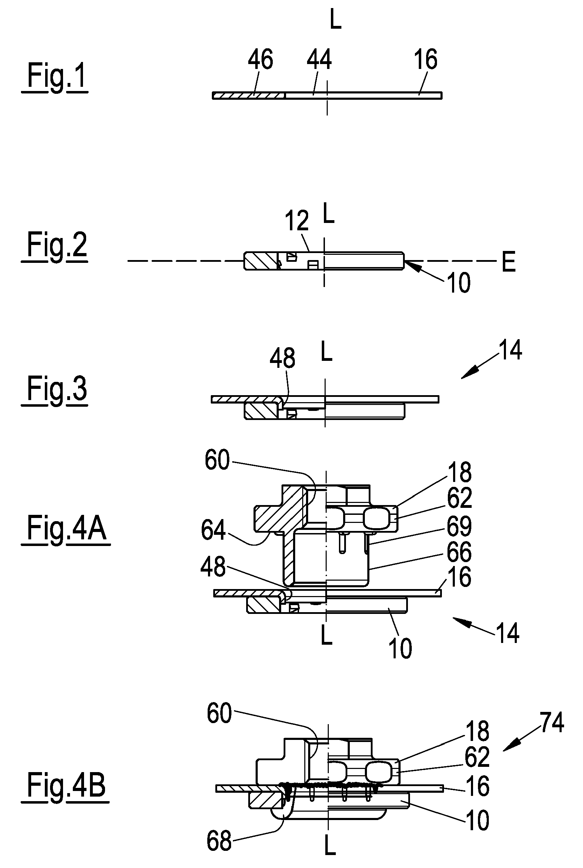

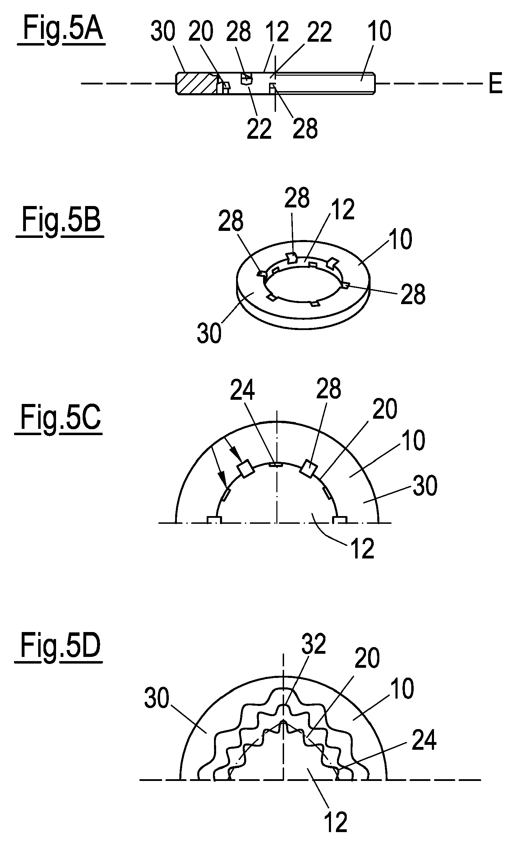

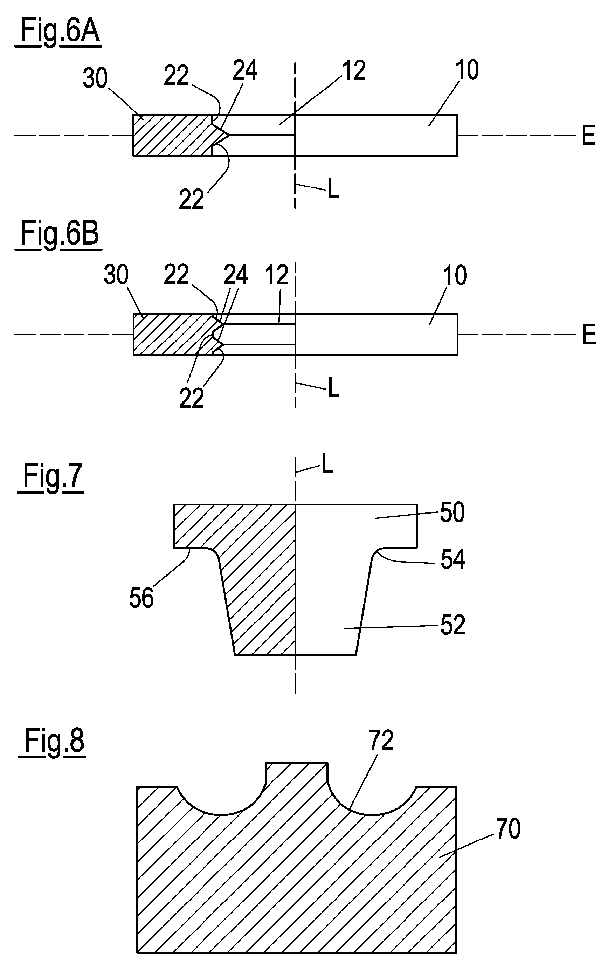

Ein wichtiger Bestandteil der vorliegenden Anmeldung ist das Blechelement 10 mit einem Loch 12 zur Anwendung in ein erstes Zusammenbauteil 14 gemäß Fig. 4B zusammen mit einem Blechteil 16 gemäß Fig. 1. Das erste Zusammenbauteil 14 wird mit einem Nietelement 18, das vor der Anbringung an das Blechteil 16 (was aus Fig. 4A für sich ersichtlich ist), zu einem fertigen Zusammenbauteil 74 (Fig. 4B) zusammengefügt. Das Blechelement 10 gemäß Fig. 2 wie auch die Blechelemente der Fig. 5A bis 5C, 5D, 6A und 6B haben alle das besondere Kennzeichen, dass der Lochrand 20 des Blechelements 10 mit mindestens einem eine Hinterschneidung 22 bildenden radial nach innen gerichteten Vorsprung 24 versehen ist.

Bei den erwähnten Blechelementen mit Loch gemäß den Fig. 2 bzw. 5A bis 5C, 5D, 6A und 6B ist ersichtlich, dass in Bezug auf eine Ebene E, die senkrecht zu der mittleren Längsachse L des Loches in halber Höhe des Loches symmetrisch ausgebildet ist und mindestens ein Vorsprung 24 am Lochrand 20 vorgesehen ist, die eine Hinterschneidung 22 auf beiden Seiten der Ebene E bildet.

Besonders günstig ist es, wenn - wie in den Fig. 2, 5A bis 5C, 5D und 6B gezeigt - mehrere radial nach innen gerichtete Hinterschneidungen 22 bildende Vorsprünge 24 vorgesehen sind, die beispielsweise auf beiden Seiten der genannten Ebene E angeordnet sind. Selbst bei der Fig. 6A, bei der nur ein radial nach innen gerichteter umlaufender, am Lochrand 20 vorgesehener Vorsprung 24 (der auch als Ringnase bezeichnet werden kann), vorhanden ist, werden zwei Hinterschneidungen 22 gebildet, die jeweils oberhalb und unterhalb der Ebene E vorliegen. Dabei ist die untere Hinterschneidung wirksam wenn das Blechteil auf der oberen Stirnseite 30 des Blechelements anliegt. Die obere Hinterschneidung 22 wird dann wirksam, wenn das Blechelement umgedreht vorliegt, so dass die hier untere Stirnseite 3o oben zu liegen kommt.

Ein besonders bevorzugtes Blechelement 10, nämlich das Blechelement gemäß den Fig. 2, bzw. 5A bis 5C, zeichnet sich dadurch aus, dass die Hinterschneidungen 22 durch jeweilige keilförmige, insbesondere sich radial zur mittleren Längsachse des Loches verlaufenden Vertiefungen 28 in der Stirnseite 30 bzw. in den Stirnseiten 30 des Blechelements 10 gebildet sind, deren größte Tiefe am Lochrand 20 vorliegt. Die Hinterschneidungen 22 entstehen aufgrund der radial nach innen gerichteten Vorsprünge 24, die durch die Herstellung der keilförmigen Vertiefungen 28 in den Stirnseiten 30 geformt sind.

Die Ausführung des Blechteils 10 gemäß Fig. 5D weist ebenfalls Hinterschneidungen 22 unterhalb der Vorsprünge bzw. Nasen 24 auf, die denen der Ausführung gemäß Fig. 2 bzw. 5A bis 5C entsprechen, nur entstehen sie hier aufgrund der Vorsprünge 24, die durch die wellenförmigen und um die mittlere Längsachse L verlaufenden Vertiefungen 32, die in die Stirnseiten 30 des Blechteils 10 eingeprägt sind. In Fig. 5D ist die wellenförmige Vertiefung nur in der einen Stirnseite 30 ersichtlich, eine weitere wellenförmige Vertiefung wird üblicherweise in die zweite untere Stirnseite 30 eingeprägt, es sei denn man bewusst auf ein zu der Ebene E symmetrisches Blechteil verzichtet oder es gelingt, diskrete Vorsprünge 24 in der Symmetrieebene auszubilden, so dass doch ein symmetrisches Blechelement 10 vorliegt. Ein zu der Ebene E symmetrisches Blechelement ist deshalb von Vorteil, weil man bei der Anwendung eines Förder- und Sortiergerätes, um das Blechelement in eine Presse zu transportieren, nicht darauf achten muss, auf welcher Stirnseite die jeweiligen Blechelemente liegen, die von einer losen Schüttung auf die Förderstrecke gehoben werden.

Obwohl die Vorsprünge 24 bei den verschiedenen gezeigten Ausführungsformen mit eher scharfkantig ausgebildeten Spitzen gezeigt sind, können sie ohne weiteres und ohne Nachteil leicht gerundete Spitzen oder insgesamt eine im Querschnitt, d.h. in einer radialen Ebene, gerundete Form aufweisen.

Die Blechelemente werden normalerweise aus einer herkömmlichen, kreisrunden Metallscheibe hergestellt bzw. die besondere erfindungsgemäße Form des Blechelements kann gleichzeitig mit der Herstellung der Metallscheibe gefertigt werden. Es ist allerdings nicht zwingend erforderlich, dass das Blechelement 10 kreisrund ist, es kann eine beliebige Außenform aufweisen, wenn dies sachdienlich ist, bspw. kann die Außenform in Draufsicht polygonal oder elliptisch sein.

Die Fig. 3 zeigt nun ein Blechteil 16, das für sich ausschnittsweise in Fig. 1 gezeigt ist (d.h. Fig. 1.zeigt nur einen Ausschnitt aus einem üblicherweise wesentlich größeres Blechteil, das auch häufig dreidimensional geformt ist, wobei allerdings der Bereich, in dem ein Befestigungselement angebracht wird, im Regelfall in einer Ebene liegt. Das Blechteil 10 wird in Fig. 3 mit dem Blechelement 10 gemäß Fig. 2 bzw. Fig. 5A bis 5D zu einem ersten Zusammenbauteil 14 geformt. Zu diesem Zweck wird das Blechteil 10 mit einer Lochung 44 versehen, deren Umrandung 46 zu einem aus der Ebene des Blechteils herausstehenden Kragen 48 umgebildet ist. Der Kragen 48 ist in das Loch 12 des Blechelements 10 hinein geformt und mit mindestens den Hinterschneidungen 22 auf der einen Seite der Mittelebene E bzw. mit den die Hinterschneidungen 22 bildenden Vorsprünge 24 in Eingriff gebracht. Die Vorsprünge bilden sich dann in die äußere Oberfläche des Kragens 48 ab, d.h. greifen formschlüssig dort ein, wodurch das Blechelement am Blechteil verliersicher angebracht ist.

Die Anbringung des Blechteils 40 an das Blechelement 10 kann in einer Presse erfolgen, bei der das Blechteil auf das untere Werkzeug der Presse oder auf einer Zwischenplatte der Presse getragen wird, während ein Formstempel von der Zwischenplatte der Presse oder von dem oberen Werkzeug der Presse getragen wird. Eine mögliche Formgebung des Formstempels 50 geht aus der Fig. 7 hervor. Man sieht dort, dass der Formstempel ein konusförmig zulaufendes Teil 52 aufweist, das für das Ziehen des Blechmaterials, das um die Lochung 44 vorliegt, zu dem Kragen 48 vorgesehen ist und gleichzeitig dafür, dass das Material des Kragens radial aufgeweitet und in Eingriff mit den Vorsprüngen 24 bzw. in die Hinterschneidungen gebracht wird. Dabei wird das Blechelement auf einer flachen Oberfläche des entsprechenden Werkzeugs oder in einer stirnseitigen Vertiefung einer Matrize (nicht gezeigt) gehalten bzw. abgestützt.

Der Radius 54 des Formstempels 50 sorgt dafür, dass das Blechmaterial des Blechteils 40 sanft um die umlaufende Kante des Lochrands umgebogen und nicht eingeschnitten wird. Es ist hilfreich wenn die genannte Kante gerundet ausgeführt wird und dies gilt natürlich auch für die entsprechende Kante auf der anderen Seite des Blechteils. Die umlaufende Ringfläche 56 des Formstempels 50 sorgt dafür, dass das Blechteil an der einen Stirnseite des Blechelements 10 anliegt.

Anstelle der beschriebenen Auslegung einer Presse, um das Blechteil und das Blechelement aneinander zu fügen, kann eine umgekehrte Anordnung verwendet werden, bei der der Formstempel nach oben ragt und vom unteren Werkzeug der Presse oder von der Zwischenplatte der Presse getragen wird, während dann das Blechelement 10 von der Zwischenplatte bzw. vom oberen Werkzeug der Presse getragen wird. Auch könnte ein Roboter oder eine mit Kraft betätigte Zange für das Fügen des Blechteils 40 und des Blechelements 10 verwendet werden, wobei auch hier der Formstempel und eine Abstützung für das Blechelement 10 sowie eine Halterung für das Blechteil 16 zur Anwendung kommen.

An dieser Stelle soll auch erwähnt werden, dass der Formstempel 50 nicht unbedingt lediglich zum Umformen des vorgelochten Blechteils 40 und zum formschlüssiges Fügen des Blechteils 40 und des Blechelements 10 verwendet werden kann, er kann auch als Lochstempel ausgebildet werden und simultan für das Lochen des Blechteils 40 verwendet werden. Dies würde dann üblicherweise in Zusammenarbeit mit einer das Blechelement abstützenden Matrize (nicht gezeigt erfolgen, die eine mittlere Passage für die Abführung des Stanzbutzens aufweist. Die mittlere Passage der Matrize wäre dann mit einem Durchmesser größer als der Durchmesser des vorderen Endes des Lochstempels versehen, was die Ausbildung des Kragens und die Abführung des Stanzbutzens begünstigt.

Das erste Zusammenbauteil 14, bestehend aus dem Blechteil 16 und dem Blechelement 10 wird anschließend gemäß den Fig. 4A und 4B mit einem Nietelement 18 zusammengefügt. Zu diesem Zweck ist das Nietelement 18 mit einem Kopfteil 62 größeren Durchmessers, das als Gewindeträge dient und welches eine Blechanlagefläche 64 bildet, sowie mit einem hohlzylindrischen Nietabschnitt 66 kleineren Durchmessers, der von dem Kopfteil 62 auf der Seite der Blechanlagefläche 64 vorsteht, versehen. Der Nietabschnitt 66 erstreckt sich beim der Zusammenfügung mit dem ersten Zusammenbauteil 14 durch die Lochung 44 und dem Kragen 48 des Blechteils sowie durch das Loch 12 des Blechelements 10 und wird auf der dem Blechteil 16 abgewandten Seite des Blechelements 10 zu einem mindestens L-förmigen vorzugsweise U-förmigen Nietbördel 68 umgebildet, wobei die Blechanlagefläche 64 auf der dem Blechelement abgewandten Seite des Blechteils anliegt. Diese Anbringung des Nietelements 60 auf das erste Zusammenbauteil, zur Bildung des fertiggestellten Zusammenbauteils, erfolgt in an sich bekannter Weise unter Anwendung eines Setzkopfes für das Nietelement 18 und einer Nietmatrize zur Ausbildung des Nietbördels 68. Eine mögliche Form für die Nietmatrize 70 ist in der Fig. 8 gezeigt, wobei die umlaufende Rollfläche 72 für die Umbördelung des unteren Endes des zunächst zylindrischen Nietabschnitts 66 zu dem Nietbördel zuständig ist.

Analog zu der Anbringung des Blechteils 40 an das Blechelement 10, kann die Anbringung des Nietelements 60 an das erste Zusammenbauteil 72 in einer Presse oder mit Hilfe eines Roboters oder einer mit Kraft betätigten Zange erfolgen.

Bei dem fertiggestellten Zusammenbauteil ist es vorteilhaft, wenn das Nietbördel 68 auf der vom Blechteil 40 abgewandten Stirnseite des Blechelements 10, vom Lochrand 20 aus gemessen, das Blechelement 10 radial um mindestens die radiale Dicke des zylindrischen Nietabschnitts 66 überlappt.

Das Nietelement 18 ist vorzugsweise im Bereich der Blechanlagefläche 62 und/ oder im Bereich des Nietabschnitts 66 mit Verdrehsicherungsmerkmalen 69 versehen ist, die sich im Blechteil 16 bzw. in dessen Kragen 48 abbilden und für die verdrehsichere Anbringung des Nietelements 60 am Blechteil 16 sorgen.

Es kann sich bei dem Nietelement 18 - wie gezeigt - um ein Mutterelement handeln, dessen Innengewinde im Kopfteil vorgesehen ist bzw. von diesem getragen ist.

Alternativ hierzu kann es sich bei dem Nietelement um ein Bolzenelement handeln (nicht gezeigt), dessen ein Außengewinde aufweisendes Schaftteil vom Kopfteil auf der dem Nietabschnitt abgewandten Seite weg steht bzw. getragen ist.

Das erfindungsgemäße Verfahren zur Herstellung des ersten Zusammenbauteils zeichnet sich dadurch aus, dass das Blechteil 16 gelocht, zu dem Kragen 48 umgeformt wird und radial gegen den Lochrand 20 und in Eingriff mit der Hinterschneidung 22 bzw. mit den Hinterschneidungen 22 oder mindestens mit einigen der Hinterschneidungen 22 gebracht wird.

Das erfindungsgemäße Verfahren nach Anspruch 13 zur Herstellung des fertigen Zusammenbauteils läuft so ab, dass der zylindrische Nietabschnitt 66 des Nietelements 60 von der dem Blechelement 10 abgewandten Seite des Blechteils 40 durch dessen Lochung 42 sowie dessen Kragen 48 und das Loch 12 des Blechelements 10 hindurch geführt wird bis die Blechanlagefläche 64 an dem Blechteil 16 anliegt und die Verdrehssicherungsmerkmale 69 in Eingriff mit dem Blechteil 16 und/oder der Innenseite des Kragens 48 gelangen und dass der Bereich des Nietabschnitts 66 auf der dem Blechteil 16 abgewandten Seite des Blechelements 10 zu einem mindestens L-förmigen, vorzugsweise U-förmigen Nietbördel 68 umgebildet ist, wobei das Nietbördel 68 die dem Blechteil 16 abgewandte Stirnseite des Blechelements 10, vom Lochrand 20 aus gemessen, radial um mindestens die radiale Dicke des zylindrischen Nietabschnitts 66 überlappt.

### Bezugszeichenliste

- 10: Blechelement
- 12: Loch
- 14: erstes Zusammenbauteil
- 16: Blechteil
- 18: Nietelement
- 20: Lochrand
- 22: Hinterschneidung
- 24: Vorsprung
- 28: Vertiefung
- 30: Stirnseite
- 32: Einprägung, wellenförmig verlaufende Vertiefung
- 44: Lochung
- 46: Umrandung
- 48: Kragen
- 50: Formstempel
- 52: konusförmig zulaufendes Teil
- 54: Radius
- 56: Ringfläche
- 60: Innengewinde
- 62: Kopfteil
- 64: Blechanlagefläche
- 66: Nietabschnitt
- 68: Nietbördel
- 69: Verdrehsicherungsmerkmale
- 70: Nietmatrize
- 72: Rollfläche
- 74: fertiges Zusammenbauteil
- L: Längsachse, mittlere Längsachse des Loches, der Lochung und des Nietelements
- E: Ebene

## Patentansprüche

1. Blechelement (10) mit Loch (12) zur Anwendung in einem Zusammenbauteil (74) mit einem Blechteil (16) und einem Nietelement (16),
**dadurch gekennzeichnet,**
**dass** der Lochrand (20) des Blechelements (10) mit mindestens einem eine Hinterschneidung (22) bildenden radial nach innen gerichteten Vorsprung (24) versehen ist.

2. Blechelement (10) nach Anspruch 1,
**dadurch gekennzeichnet,**
**dass** in Bezug auf eine Symmetrieebene (E), die senkrecht zu der mittleren Längsachse (L) des Loches (12) in halber Höhe des Loches (12) steht, mindestens eine Hinterschneidung (22) auf beiden Seiten der Ebene (E) im Lochrand vorgesehen ist.

3. Blechelement (10) nach Anspruch 1 oder 2,
**dadurch gekennzeichnet,**
**dass** mehrere radial nach innen gerichtete Hinterschneidungen (22) bildende Vorsprünge (24) vorgesehen sind, die beispielsweise auf beiden Seiten der genannten Ebene (E) vorgesehen sind.

4. Blechelement (10) nach einem der vorgenannten Ansprüche,
**dadurch gekennzeichnet,**
**dass** die Hinterschneidungen (22) durch jeweilige keilförmige, insbesondere radial zur mittleren Längsachse (L) des Loches (12) verlaufende Vertiefungen (28) in der Stirnseite (30) bzw. in den Stirnseiten (30) des Blechelements (10) gebildet sind, deren größte Tiefe am Lochrand (20) vorliegt.

5. Blechelement (10) nach einem der vorgenannten Ansprüche 1 bis 3,
**dadurch gekennzeichnet,**
**dass** die Hinterschneidungen (22) durch mindestens eine wellenförmig um die mittlere Längsachse (L) verlaufende und in einer Stirnseite (30) des Blechelements benachbart zum Lochrand (20) vorgesehenen Einprägung (32), vorzugsweise durch jeweilige in den beiden Stirnseiten (30) des Blechelements (10) vorgesehene, wellenförmig verlaufende Einprägungen bzw. Vertiefungen (32) gebildet sind.

6. Blechelement (10) nach einem der vorhergehenden Ansprüche,
**dadurch gekennzeichnet,**
**dass** es die Form einer kreisrunden Metallscheibe aufweist.

7. Blechteil (16) zur Anwendung in einem Zusammenbauteil (14) mit einem Blechelement (10) nach einem der vorgenannten Ansprüche,
**dadurch gekennzeichnet,**
**dass** das Blechteil (16) mit einer Lochung (44) versehen ist, deren Umrandung (45) zu einem aus der Ebene des Blechteils (16) herausstehenden Kragen (48) umgebildet ist, der in das Loch (12) des Blechelements (10) hinein geformt ist und mit mindestens einer Hinterschneidung (22) )in Eingriff steht, wodurch das Blechelement (10) am Blechteil (16) verliersicher angebracht ist.

8. Zusammenbauteil (74) bestehend aus einem Blechteil (16) nach Anspruch 7 zusammen mit einem Nietelement (18),
**dadurch gekennzeichnet,**
**dass** das Nietelement (18) mit einem Kopfteil (52) größeren Durchmessers, das als Gewindeträger dient und welches eine Blechanlagefläche (64) bildet sowie mit einem hohlzylindrischen Nietabschnitt (66) kleineren Durchmessers, der von dem Kopfteil (62) auf der Seite der Blechanlagefläche (64) vorsteht, welcher sich durch die Lochung (44) und den Kragen (48) des Blechteils (16) sowie durch das Loch (12) des Blechelements hindurch erstreckt und auf der dem Blechteil abgewandten Seite des Blechelements (10) zu einem mindestens L-förmigen, vorzugsweise U-förmigen Nietbördel (68) umgebildet ist, wobei die Blechanlagefläche (62) auf der dem Blechelement (10) abgewandten Seite des Blechteils (16) anliegt.

9. Zusammenbauteil (74) nach dem Anspruch 8,
**dadurch gekennzeichnet,**
**dass** das Nietbördel (68) auf der vom Blechteil (16) abgewandte Stirnseite (30) des Blechelements (10), vom Lochrand (20) aus gemessen, das Blechelement (10) radial um mindestens die radiale Dicke des zylindrischen Nietabschnitts (66) überlappt.

10. Zusammenbauteil (74) nach Anspruch 8 oder 9,
**dadurch gekennzeichnet,**
**dass** das Nietelement (18) im Bereich der Blechanlagefläche (64) und/oder im Bereich des Nietabschnitts (66) mit Verdrehsicherungsmerkmalen (69) versehen ist, die sich im Blechteil (16) bzw. in dessen Kragen (48) abbilden und für die verdrehsichere Anbringung des Nietelements (18) am Blechteil (16) sorgen.

11. Zusammenbauteil (74) nach einem der Ansprüche 8,9 oder 10,
**dadurch gekennzeichnet,**
**dass** es sich bei dem Nietelement (16) um ein Mutterelement handelt dessen Innengewinde (60) im Kopfteil (62) vorgesehen ist bzw. von diesem getragen ist.

12. Zusammenbauteil nach einem der Ansprüche 8, 9 oder 10,
**dadurch gekennzeichnet,**
**dass** es sich bei dem Nietelement um ein Bolzenelement handelt, dessen ein Außengewinde aufweisendes Schaftteil vom Kopfteil auf der dem Nietabschnitt abgewandten Seite weg steht bzw. getragen ist.

13. Verfahren zur Herstellung eines ersten Zusammenbauteils (14) bestehend aus einem Blechteil (16) und einem Blechelement (10) gemäß dem Anspruch 7,
**dadurch gekennzeichnet,**
**dass** das Blechteil (16) gelocht, im Bereich um die Lochung (44) zu dem Kragen (48) umgeformt und radial gegen den Lochrand (20) und in Eingriff mit der Hinterschneidung (22) bzw. mit den Hinterschneidungen (22) oder mindestens mit einigen der Hinterschneidungen (22) gebracht wird.

14. Verfahren nach Anspruch 13,
**dadurch gekennzeichnet,**
**dass** zur Herstellung des fertigen Zusammenbauteils (74) nach einem der Ansprüche 8 bis 12, der zylindrische Nietabschnitt (66) des Nietelements (18) von der dem Blechelement (10) abgewandten Seite des Blechteils (16) durch dessen Lochung (44) sowie dessen Kragen (48)und das Loch (12) des Blechelements (10) hindurch geführt wird bis die Blechanlagefläche (64) an dem Blechteil (16) anliegt und die Verdrehssicherungsmerkmale (69) in Eingriff mit dem Blechteil (16) und/oder Innenseite des Kragens (48) gelangen und dass der Bereich des Nietabschnitts (66) auf der dem Blechteil (16) abgewandten Seite des Blechelements (10) zu einem mindestens L-förmigen vorzugsweise U-förmigen Nietbördel (68) umgebildet ist, wobei das Nietbördel (68) die dem Blechteil abgewandte Stirnseite (30) des Blechelements (10), vom Lochrand (20) aus gemessen, radial um mindestens die radiale Dicke des zylindrischen Nietabschnitts (66) überlappt.
